(19) **Europäisches Patentamt / European Patent Office / Office européen des brevets**

(11) **EP 2 914 952 B1**

(12) # FASCICULE DE BREVET EUROPEEN

(45) Date de publication et mention de la délivrance du brevet:
**06.01.2021 Bulletin 2021/01**

(21) Numéro de dépôt: **13783939.5**

(22) Date de dépôt: **30.10.2013**

(51) Int Cl.:
**G01N 21/47** *(2006.01)*    **G01N 15/14** *(2006.01)*
**G03H 1/04** *(2006.01)*    **G01N 15/10** *(2006.01)*

(86) Numéro de dépôt international:
**PCT/EP2013/072720**

(87) Numéro de publication internationale:
**WO 2014/068003 (08.05.2014 Gazette 2014/19)**

(54) **DISPOSITIF D'ACQUISITION D'UNE IMAGE D'UN ÉCHANTILLON, COMPORTANT UN ORGANE DE RÉGULATION DU CHAUFFAGE D'UN SUPPORT DE RÉCEPTION DE L'ÉCHANTILLON, ET SYSTÈME D'IMAGERIE ASSOCIÉ**

VORRICHTUNG ZUR AUFNAHME EINES BILDES EINER PROBE MIT EINER ANLAGE ZUR REGELUNG DER ERWÄRMUNG EINER HALTERUNG ZUR AUFNAHME DER PROBE UND ZUGEHÖRIGES BILDGEBUNGSSYSTEM

DEVICE FOR ACQUIRING AN IMAGE OF A SAMPLE, COMPRISING A FACILITY FOR REGULATING THE HEATING OF A SUPPORT FOR RECEIVING THE SAMPLE, AND ASSOCIATED IMAGING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2012 FR 1260385**

(43) Date de publication de la demande:
**09.09.2015 Bulletin 2015/37**

(73) Titulaire: **Commissariat à l'Energie Atomique et aux Energies Alternatives**
**75015 Paris (FR)**

(72) Inventeurs:
• **POHER, Vincent**
**F-62340 Guines (FR)**
• **POUTEAU, Patrick**
**F-38240 Meylan (FR)**

(74) Mandataire: **Lavoix**
**2, place d'Estienne d'Orves**
**75441 Paris Cedex 09 (FR)**

(56) Documents cités:
• **ALLIER C P ET AL: "Thin wetting film lensless imaging", OPTICAL DIAGNOSTICS AND SENSING XI: TOWARD POINT-OF-CARE DIAGNOSTICS; AND DESIGN AND PERFORMANCE VALIDATION OF PHANTOMS USED IN CONJUNCTION WITH OPTICAL MEASUREMENT OF TISSUE III, SPIE, 1000 20TH ST. BELLINGHAM WA 98225-6705 USA, vol. 7906, no. 1, 10 février 2011 (2011-02-10), pages 1-8, XP060005788, DOI: 10.1117/12.874876**
• **V. POHER ET AL: "Lensfree in-line holographic detection of bacteria", PROCEEDINGS OF SPIE, vol. 8086, 8 juin 2011 (2011-06-08), pages 1-7, XP055066330, ISSN: 0277-786X, DOI: 10.1117/12.889324**
• **CHRISTEN J B ET AL: "Hybrid Silicon/Silicone (polydimethylsiloxane) Microsystem for Cell Culture", CONFERENCE PROCEEDINGS. ANNUAL INTERNATIONAL CONFERENCE OF THE IEEE ENGINEERING IN MEDICINE AND BIOLOGY SOCIETY (IEEE CAT. NO. 06CH37748); 30 AUG.-3 SEPT. 2006; NEW YORK, NY, USA, IEEE, PISCATAWAY, NJ, USA, 30 août 2006 (2006-08-30), pages 2490-2493, XP031390229, ISBN: 978-1-4244-0032-4**

EP 2 914 952 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un dispositif d'acquisition d'une image d'un échantillon, le dispositif d'acquisition comprenant un support de réception de l'échantillon, présentant une face transparente, et un capteur d'image, propre à acquérir une image de l'échantillon, le capteur d'image étant disposé en regard de ladite face transparente.

L'invention concerne également un système d'imagerie, le système d'imagerie comprenant un tel dispositif d'acquisition d'une image de l'échantillon et une source de lumière spatialement cohérente, propre à éclairer l'échantillon selon une direction d'éclairement.

L'invention s'applique en particulier à la reconstruction d'un échantillon comportant des objets diffractants baignant dans un milieu liquide contenu dans le support, le support comportant une surface transparente et les objets diffractants étant par exemple au contact de la surface transparente du support.

Par propriétés optiques, on entend notamment l'absorption de l'objet ou le retard de phase introduit par l'objet, sachant que ces paramètres représentent respectivement le module et l'argument de la fonction d'opacité complexe de l'objet. L'invention permet notamment de déterminer la distribution spatiale de ces paramètres.

L'invention concerne notamment l'imagerie sans lentille, également appelée imagerie de contact, c'est-à-dire l'acquisition, par le photodétecteur matriciel, d'images formées par le rayonnement transmis directement par l'échantillon, en l'absence d'une optique de grossissement disposée entre l'échantillon et le capteur d'image. Le capteur d'image est également appelé dans ce cas dispositif d'imagerie sans lentille, et apte à former une image de l'échantillon tout en étant placé à une faible distance de celui-ci. Par faible distance, on entend une distance comprise entre 100 $\mu$m et quelques centimètres, de préférence inférieure à 1cm.

On connait du document EP 2 233 923 A1 un dispositif d'acquisition du type précité. Ce document décrit un système permettant de caractériser la dynamique de coagulation ou de sédimentation d'un fluide contenant du sang. Le système de caractérisation comprend notamment un dispositif d'acquisition d'une image du fluide, et une source de lumière spatialement cohérente propre à éclairer le fluide. Le dispositif d'acquisition comprend une chambre fluidique dans laquelle le fluide contenant des particules sanguines est introduit, la chambre fluidique formant un support de réception de réception de l'échantillon à caractériser. La chambre fluidique est à la température ambiante.

Le dispositif d'acquisition comprend également un capteur d'images, tel qu'un capteur matriciel de type CCD (de l'anglais *Charged-Coupled Device*) ou CMOS (de l'anglais *Complementary Metal Oxyde Semi-conductor*), agencé pour permettre l'acquisition d'une série temporelle d'images d'un motif optique de granularité engendré par l'interaction entre les particules contenues dans la chambre et un faisceau lumineux issu de la source de lumière.

Toutefois, le contrôle de la température ambiante ne permet pas une bonne régulation de la température de la chambre fluidique, ce qui rend délicate l'imagerie de certaines particules, telles que des protéines.

L'article « Thin wetting film lensless imaging » de Allier et al, publié dans Optical Diagnostics and Sensing, décrit également un dispositif d'acquisition du type précité.

L'article « Lensfree in-line holographic detection of bacteria » de Poher et al, publié dans Advanced MicroscopyTechniques, décrit un dispositif d'imagerie sans lentille.

L'article « Hybrid Silicon/Silicone (polydimethylsiloxane) Microsystem for Cell Culture » de Christen et al décrit un micro-incubateur avec une matrice CMOS de silicium intégrée.

Le but de l'invention est donc de proposer un dispositif d'acquisition permettant d'améliorer la régulation en température du support de réception et de l'échantillon contenu dans ce support, afin d'éviter une dégradation dans le temps des propriétés de l'échantillon à observer.

A cet effet, l'invention a pour objet un dispositif d'acquisition selon la revendication 1.

Suivant d'autres aspects avantageux de l'invention, le dispositif d'acquisition comprend une ou plusieurs des caractéristiques suivantes, prises isolément ou suivant toutes les combinaisons techniquement possibles, selon les revendications 2 à 7.

L'invention a également pour objet un système d'imagerie selon la revendication 8.

Suivant un autre aspect avantageux de l'invention, le système d'imagerie est selon la revendication 9.

Les caractéristiques et avantages de l'invention apparaitront à la lecture de la description qui va suivre, donnée uniquement à titre d'exemple non limitatif, et faite en référence aux dessins annexés, sur lesquels :

- la figure 1 est une représentation schématique d'un système d'imagerie selon l'invention, comprenant une source de lumière propre à éclairer un échantillon et un dispositif d'acquisition d'une image de l'échantillon,
- la figure 2 est une représentation schématique du dispositif d'acquisition selon un premier mode de réalisation de l'invention, le dispositif d'acquisition comportant un support de réception de l'échantillon, un capteur d'image, le capteur d'image formant moyen de chauffage du support de réception, un capteur de la température du support de réception et un organe de régulation du chauffage du support de réception,
- la figure 3 est une représentation schématique de l'organe de régulation de la figure 2, comportant une boucle de rétroaction,

- la figure 4 est une vue représentant une courbe de la température du capteur d'image associée à un premier chronogramme de mise sous tension du capteur d'image,
- la figure 5 est une vue analogue à celle de la figure 4 pour un deuxième chronogramme de mise sous tension du capteur d'image,
- la figure 6 est une vue d'une image thermique du capteur d'image, avant la mise sous tension du capteur d'image,
- la figure 7 est une courbe représentant la température du capteur d'image, le long du segment VII de la figure 6,
- la figure 8 est une vue d'une image thermique du capteur d'image, après la mise sous tension du capteur d'image,
- la figure 9 est une courbe représentant la température du capteur d'image, le long du segment IX de la figure 8,
- la figure 10 est une vue analogue à celle de la figure 2, selon un deuxième mode de réalisation de l'invention, et
- la figure 11 est une vue analogue à celle de la figure 2, selon un troisième mode de réalisation de l'invention.

De façon conventionnelle, dans la présente demande, l'expression « sensiblement égale à » exprimera une relation d'égalité à plus ou moins 5%.

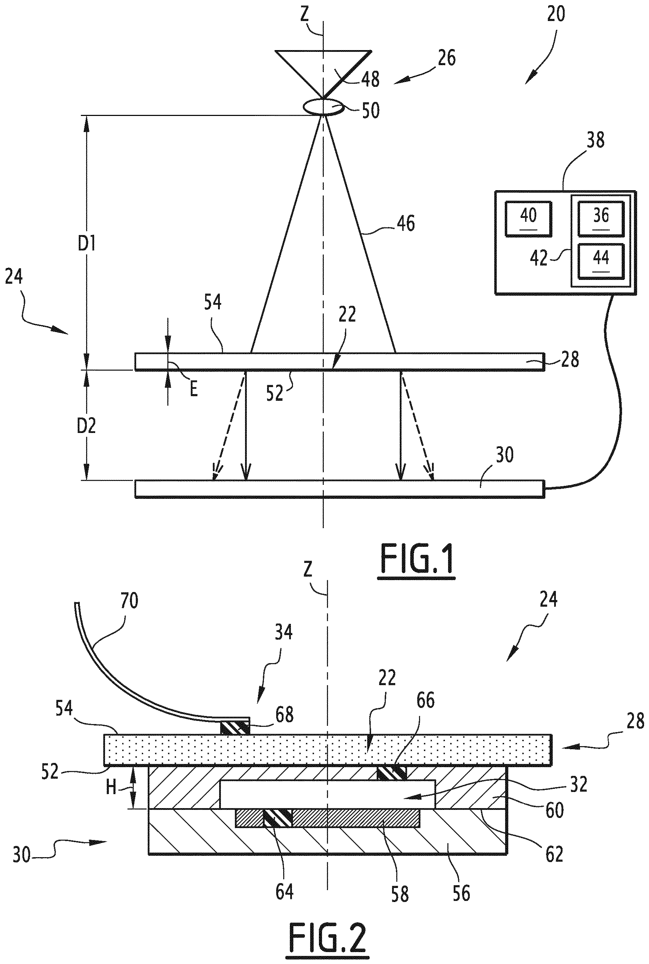

Sur la figure 1, un système 20 d'imagerie d'un échantillon 22 comprend un dispositif 24 d'acquisition d'une image de l'échantillon 22 et une source de lumière 26 spatialement cohérente propre à éclairer l'échantillon 22 selon une direction d'éclairement. La direction d'éclairement est, par exemple, la direction verticale Z.

Le système d'imagerie 20 est propre à établir une image dudit échantillon

A partir de cette dernière, les propriétés optiques de l'échantillon 22, notamment l'absorption ou le retard de phase, sont, par exemple, reconstruites à l'aide d'un logiciel de reconstruction.

L'échantillon 22 comporte des objets diffractants, non représentés, les objets diffractants étant, par exemple, des particules, telles que des particules biologiques, c'est-à-dire des cellules (par exemple des globules rouges, des globules bancs ou des plaquettes), des bactéries ou colonies bactériennes, des cellules ou agrégats de cellules. En variante, les particules diffractantes sont des microbilles.

Le dispositif d'acquisition 24 comprend un support 28 de réception de l'échantillon 22 et un capteur d'image 30, propre à acquérir une image de l'échantillon 22. Ce support de réception 28 permet le confinement de l'échantillon 22 à une distance maîtrisée du dispositif d'acquisition 24. Il comporte une face transparente, entre l'échantillon 22 et le capteur d'image 30. Ainsi, le capteur d'image 30 est propre à établir une image de l'échantillon 22.

Le dispositif d'acquisition 24 comprend en outre un moyen 32 de chauffage du support de réception 28 et un capteur de température 34 propre à mesurer une température du support de réception 28, visibles sur la figure 2. Ce moyen de chauffage ne doit pas perturber le trajet des photons entre la source de lumière. En effet, l'analyse de l'échantillon étant basée sur l'image de l'échantillon acquise par le capteur d'image 30, il est nécessaire que le trajet optique entre l'échantillon 22 et le capteur d'images 30 soit le moins perturbé possible.

Le dispositif d'acquisition 24 comprend en outre un organe 36 de régulation du chauffage du support de réception 28, en fonction de la température mesurée par le capteur de température 34, comme représenté sur la figure 1.

Selon un mode de réalisation, le dispositif d'acquisition 24 comprend également une unité de traitement d'informations 38 comportant un processeur 40 et une mémoire 42 apte à stocker un logiciel 44 de détermination des propriétés de l'échantillon 22, ces propriétés étant déterminées par le capteur d'image 30. Par propriétés, on entend des propriétés optiques de l'échantillon (par exemple l'absorption), ou des propriétés physiques (coagulation, agglomération de particules), ou encore la présence ou l'absence d'un analyste.

Le dispositif d'acquisition 24 comprend un boîtier de protection, non représenté, à l'intérieur duquel sont disposés notamment le support de réception 28, le capteur d'image 30, le moyen de chauffage 32, le capteur de température 34, l'organe de régulation 36 et l'unité de traitement d'informations 38.

La source de lumière 26 est propre à émettre un faisceau lumineux 46 selon la direction verticale Z, afin d'éclairer l'échantillon 22. La source de lumière 26 est disposée à une première distance D1 du support de réception 28 selon la direction d'éclairement Z. La première distance D1 présente, de préférence, une valeur comprise entre 1 cm et 30 cm.

La source de lumière 26 est une source spatialement cohérente et comporte, par exemple, une source ponctuelle telle qu'une diode électroluminescente 48, également appelée LED (de l'anglais *Light-Emitting Diode*), et un diaphragme 50, disposé au contact de la LED 48. Le diaphragme 50 a un diamètre compris entre 50 μm et 500 μm, et est placé au contact de la LED 48. Cela permet d'augmenter la cohérence spatiale du rayonnement lumineux. Lorsque la source de lumière 26 comporte la LED 48, la première distance D1 est, par exemple, égale à 8 cm.

En variante, la source de lumière 26 est constituée de la diode électroluminescente 48, et ne comporte pas de diaphragme. La diode électroluminescente 48 présente alors des dimensions suffisamment réduites pour être considérée comme spécialement cohérente, le diamètre de la diode électroluminescence étant inférieur au dixième de la première distance D1 séparant cette diode électroluminescente du support de réception 28.

En variante encore, la source de lumière 26 est une source de lumière spatialement et temporellement cohérente, telle qu'une diode laser (DL) ou encore une diode laser de type VCSEL (de l'anglais *Vertical Cavity Surface Emitting Laser*). La diode laser présente une longueur d'onde par exemple sensiblement égale à 670 nm.

Le support de réception 28 est disposé entre la source de lumière 26 et le capteur d'image 30 selon la direction d'éclairement Z. Il comporte au moins une plaque 52, transparente sensiblement perpendiculaire à la direction d'éclairement Z.

Le support de réception 28 comporte, par exemple, une plaque inférieure 52, transparente, et une plaque supérieure 54, translucide, et de préférence transparente, sensiblement perpendiculaires à la direction verticale d'éclairement Z, comme représenté sur les figures 1 et 2. Ces plaques 52, 54 sont transparentes ou translucides afin de permettre l'éclairement de l'échantillon 22 par la source de lumière 26, ainsi que l'acquisition d'images par le capteur d'image 30. Les plaques inférieure 52 et supérieure 54 sont, par exemple, deux lames de verre, séparées par des espaceurs non représentés, de sorte que les lames de verre sont espacées d'environ 160 $\mu$m selon la direction verticale Z.

Le support de réception 28 présente une épaisseur E selon la direction verticale Z. L'épaisseur E est, par exemple, de valeur comprise entre 20 $\mu$m et 1000 $\mu$m, de préférence comprise entre 30 $\mu$m et 300 $\mu$m.

Le support de réception 28 est disposé à une deuxième distance D2 du capteur d'image 30 selon la direction d'éclairement Z. La deuxième distance D2 correspond alors à la distance entre le capteur d'image 30 et la plaque inférieure 52 selon la direction verticale Z. La première distance D1 correspond alors à la distance entre la source de lumière 26 et la plaque inférieure 52 selon la direction verticale Z.

Le support de réception 28 est, par exemple, une chambre fluidique destinée à recevoir l'échantillon 22 sous forme liquide. La chambre fluidique 28 comprend une zone de dépôt du liquide et un ou plusieurs canaux de circulation du liquide 22, non représentés, délimités par la plaque inférieure 52 et la plaque supérieure 54 selon la direction verticale d'éclairement Z.

Le capteur d'image 30 est propre à acquérir des images du rayonnement transmis par l'échantillon 22 éclairé par le faisceau lumineux 46. Par rayonnement transmis, on entend le rayonnement traversant l'échantillon 22 de telle sorte que le capteur d'image 30 et la source de lumière 26 sont situés de part et d'autre de l'échantillon 22. Le capteur d'image 30 est disposé en regard de la plaque inférieure 52 transparente.

Le capteur d'image 30 est propre à établir au moins une figure de diffraction transmise par l'échantillon 22, la ou chaque figure de diffraction correspondant à des ondes diffractées par une ou plusieurs particules, lors de l'éclairement de l'échantillon 22.

Le capteur d'image 30 comprend un substrat 56, un photodétecteur matriciel 58 intégré dans le substrat 56 et un capot 60 de protection du photodétecteur 58, le capot de protection 60 étant disposé au-dessus du photodétecteur 58 et en appui contre un bord périphérique supérieur 62 du substrat.

Dans l'exemple de réalisation de la figure 2, le capteur d'image 30 est un capteur d'image CMOS, et le photodétecteur 58 est un CMOS. En variante, le capteur d'image 30 est un capteur d'image CCD, et le photodétecteur 58 est un CCD.

Le capteur d'image 30 est disposé à la deuxième distance D2 du support de réception 28 selon la direction verticale Z. La deuxième distance D2 présente une valeur comprise entre 100 $\mu$m et quelques centimètres, de préférence inférieure à 1 cm, et de préférence encore comprise entre 100 $\mu$m et 2 mm. Dans l'exemple de réalisation décrit, la deuxième distance D2 est sensiblement égale à 300 $\mu$m.

Dans l'exemple de réalisation de la figure 2, le support de réception 28 est disposé en appui contre la surface supérieure du capot de protection 60, et la deuxième distance D2 est alors sensiblement égale à la hauteur H du capot de protection 60 selon la direction verticale Z.

Le fait de privilégier une deuxième distance D2 de faible valeur, c'est-à-dire une distance courte entre le capteur d'image 30 et le support de réception 28, permet de limiter les phénomènes d'interférence entre différentes figures de diffraction lorsque l'échantillon 22 est éclairé.

Les images acquises par le capteur d'image 30 sont formées par le rayonnement transmis directement par l'échantillon 22, en l'absence d'une optique de grossissement disposée entre le support de réception 28 et le capteur d'image 30. Le capteur d'image 30 est également appelé dispositif d'imagerie sans lentille, et est apte à former une image de l'échantillon 22, tout en étant placé à une faible distance de ce dernier. Par faible distance, on entend, comme indiqué précédemment, une distance inférieure à quelques centimètres, de préférence inférieure à 1 cm, la deuxième distance D2 étant par exemple égale à 300 $\mu$m. L'absence d'optique de grossissement évoquée ci-dessus n'exclut pas la présence de microlentilles formées au niveau de chaque pixel du capteur d'image 30.

Le moyen de chauffage 32 est propre à chauffer le support de réception 28 après réception d'un ordre de commande issu de l'organe de régulation 36, l'organe de régulation 36 étant propre à commander le chauffage du capteur d'image 30 tant qu'une température prédéterminée de consigne Tconsigne n'est pas atteinte.

Selon un premier mode de réalisation décrit, le moyen de chauffage 32 est formé par le capteur d'image 30, l'organe de régulation 36 étant propre à commander la mise sous tension du capteur d'image 30 tant que la température prédéterminée de consigne Tconsigne n'est pas atteinte.

Le capteur de température 34 comporte au moins une sonde de température 64, 66, 68 agencée à proximité du support de réception 28. Dans l'exemple de réalisation de la figure 2, le capteur de température 34 comporte une première sonde de température 64 intégrée au photodétecteur 58 du capteur d'image. Le capteur de température 34 comporte une deuxième sonde de température 66 disposée sur la surface supérieure du capot de protection 60 et en contact avec la plaque inférieure 52 du support de réception. Le capteur de température 34 comporte une troisième sonde de température 68 fixée sur une languette 70 de maintien, la languette de maintien 70 étant propre à maintenir le support de réception 28 en appui contre le capot de protection 60. Les première, deuxième et troisième sondes de température 64, 66, 68 sont connues en soi.

En variante, le capteur de température 34 comporte seulement une ou deux sondes parmi les première, deuxième et troisième sondes de température 64, 66, 68.

L'organe de régulation 36 est propre à réguler le chauffage du support de réception 28 en fonction de la température prédéterminée de consigne Tconsigne.

L'organe de régulation 36 est réalisé, par exemple, sous forme d'un logiciel, et la mémoire 42 est apte à stocker le logiciel de régulation 36. En variante, l'organe de régulation 36 est réalisé sous forme d'un circuit intégré dédié, ou encore sous forme d'un circuit logique programmable.

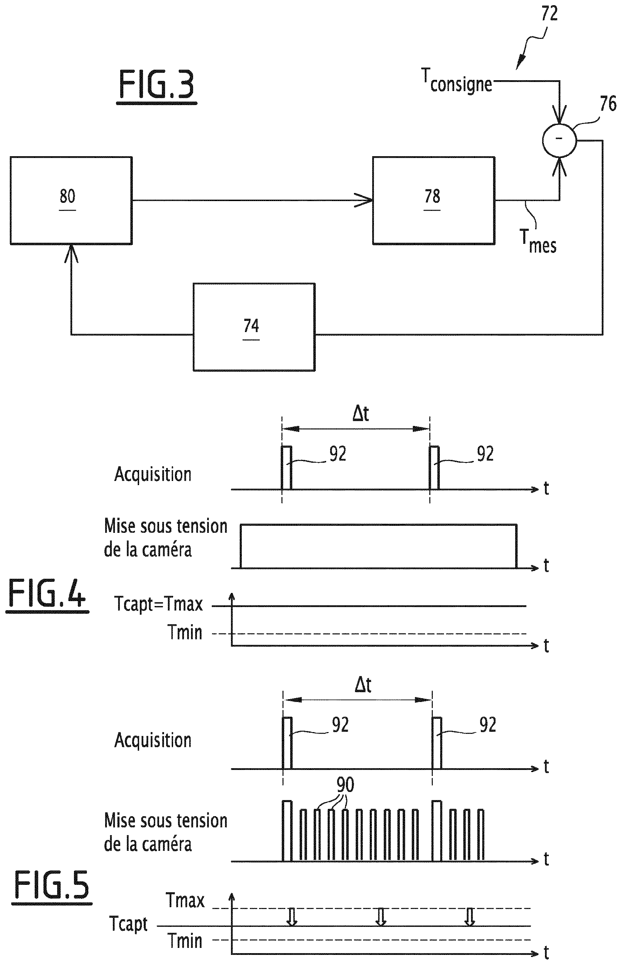

L'organe de régulation 36 comporte, par exemple, une boucle de rétroaction 72, décrite par la suite en regard de la figure 3.

Le photodétecteur matriciel 58 comportant une pluralité de pixels, non représentés. Chaque pixel du photodétecteur 58 présente des dimensions inférieures ou égales à 10 $\mu$m, voire 4 $\mu$m. Chaque pixel est, par exemple, en forme d'un carré dont le côté est de valeur inférieure ou égale à 10 $\mu$m, voire à 4 $\mu$m. En variante, chaque pixel est en forme d'un carré de 2,2 $\mu$m de côté.

Le photodétecteur matriciel 58 est un capteur d'images en deux dimensions, à savoir dans un plan perpendiculaire à l'axe longitudinal X.

Le photodétecteur matriciel 58 comporte en complément des microlentilles, non représentées, chaque microlentille étant disposée au-dessus d'un pixel correspondant. De telles microlentilles sont intégrées au capteur. Elles permettent d'améliorer le rendement de collecte et ne forment pas une optique de grossissement disposée entre le support de réception 28 et le photodétecteur 58.

La boucle de rétroaction 72, visible sur la figure 3, comporte un étage 74 de calcul d'une correction en température, et un soustracteur 76 connecté en entrée de l'étage de calcul 74, le soustracteur 76 recevant en entrée, d'une part, la température prédéterminée de consigne Tconsigne, et d'autre part, une température instantanée Tmes, la température instantanée Tmes étant mesurée par un étage 78 de mesure de la température du support de réception.

La boucle de rétroaction 72 comporte un étage 80 de commande du moyen de chauffage 32 pendant une période de temps prédéterminée en fonction de la correction calculée, l'étage de commande 80 étant connecté en sortie de l'étage de calcul 74, et l'étage de mesure 78 connecté en sortie de l'étage de commande 80.

Dans le mode de réalisation décrit, l'étage de commande 80 est propre à commander la mise sous tension du capteur d'image 30 pendant une période de temps prédéterminée en fonction de la correction calculée. La température du capteur d'image 30, notée Tcapt, vérifie alors l'équation suivante :

$$Tcapt = T\min + (T\max - T\min) \times \rho$$

$$avec \quad \rho = \frac{durée\ de\ mise\ sous\ tension}{durée\ de\ cycle} \tag{1}$$

où Tmin représente une valeur minimale de la température du capteur d'image 30,
et Tmax représente une valeur maximale de la température du capteur d'image 30.

Lorsque le capteur d'image 30 est en permanence sous tension, la température du capteur d'image Tcapt est égale à la valeur maximale Tmax, comme représenté sur la figure 4. Lorsque le capteur d'image 30 n'est pas en permanence sous tension, le capteur d'image 30 étant alimenté au cours d'impulsions de tension successives 90, alors la température du capteur d'image Tcapt est strictement comprise entre la valeur minimale Tmin et la valeur maximale Tmax, comme représenté sur la figure 5. La valeur minimale Tmin correspond à la température du capteur d'image 30 lorsque celui-ci est hors tension depuis un laps de temps minimal.

Dans l'exemple de réalisation des figures 4 et 5, les images sont acquises par le capteur d'image 30 à une cadence de 2 images par seconde, et la durée Δt entre deux acquisitions 92 est sensiblement égale à 500 ms. La durée d'acquisition de l'image est très courte, en comparaison avec la durée Δt entre deux acquisitions, la durée d'acquisition étant de l'ordre de quelques ms, ce qui autorise une alimentation régulée du capteur d'image 30 entre deux acquisitions 92, par exemple à l'aide d'impulsions 90 comme représenté sur la figure 5.

A partir de l'équation (1) et de la correction calculée par l'étage de calcul 74, l'étage de commande 80 en déduit la durée de mise sous tension du capteur d'image 30.

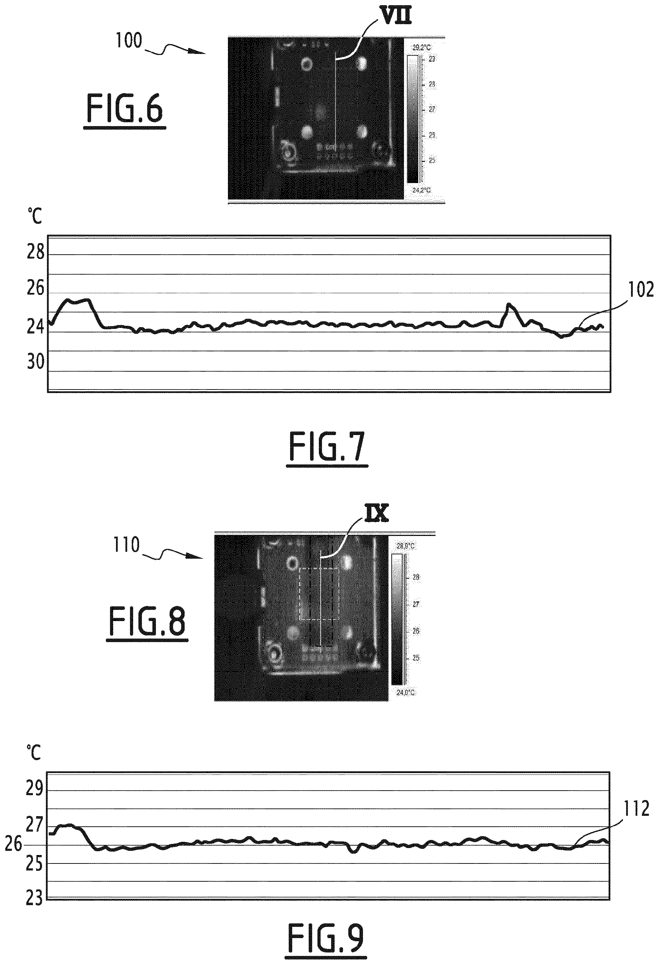

La figure 6 représente une première image thermique 100 du capteur d'image 30, avant la mise sous tension du capteur d'image 30, et sur la figure 7, une première courbe 102 représente la température du capteur d'image Tcapt, le long du segment VII de la figure 6. La première courbe 102 montre que la température minimale Tmin est sensiblement égale à 24°C dans l'exemple de réalisation décrit.

La figure 8 représente une deuxième image thermique 110 du capteur d'image 30, après la mise sous tension régulée du capteur d'image 30, et sur la figure 9, une deuxième courbe 112 représente la température du capteur d'image Tcapt, le long du segment IX de la figure 8. La deuxième courbe 112 montre que la température du capteur d'image Tcapt oscille sensiblement autour de 26°C dans l'exemple de réalisation décrit, la température prédéterminée de consigne Tconsigne étant égale à 26°C dans cet exemple.

Ainsi, en ajustant les instants de mise sous tension du capteur d'image 30, l'organe de régulation 36 permet d'ajuster la température du capteur d'image Tcapt en fonction de la température de consigne souhaitée Tconsigne. Le capteur d'image 30 formant moyen de chauffage 32, en dehors des périodes d'acquisition d'image, permet alors de chauffer l'échantillon 22 contenu dans le support de réception 28 sans affecter la transparence du support de réception, afin de ne pas perturber le trajet des photons du faisceau lumineux 46.

Le moyen de chauffage 32 formé par le capteur d'image 30 est en outre particulièrement simple et peu coûteux, puisqu'il ne nécessite pas d'élément additionnel de chauffage.

En outre, la régulation du chauffage du support de réception 28 à l'aide de la boucle de rétroaction 72 est particulièrement simple à mettre en œuvre.

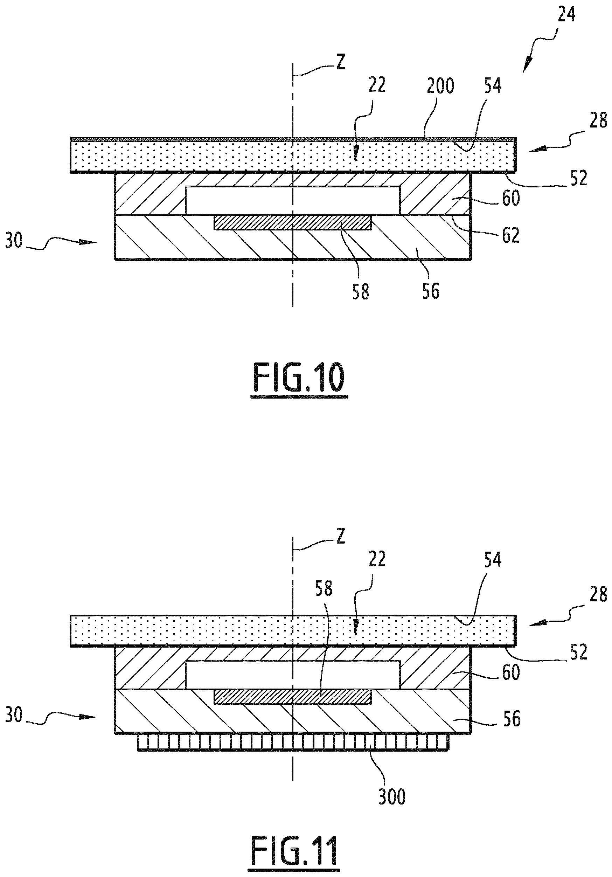

La figure 10 illustre un deuxième mode de réalisation pour lequel les éléments analogues au premier mode de réalisation, décrit précédemment, sont repérés par des références identiques, et ne sont pas décrits à nouveau.

Sur la figure 10, le ou les capteurs de température 64, 66, 68 n'ont pas été représentés par souci de simplification des dessins.

Selon le deuxième mode de réalisation, le moyen de chauffage 32 comporte une couche transparente 200 disposée au contact d'une face transparente du support de réception 28.

La face au contact de la couche transparente 200 est sensiblement perpendiculaire à la direction d'éclairement Z.

Dans l'exemple de réalisation de la figure 10, la couche transparente 200 est disposée au contact de la plaque supérieure 54. En variante non représentée, la couche transparente 200 est disposée au contact de la plaque inférieure 52.

En variante encore, la couche transparente 200 est disposée au contact de la plaque inférieure 52 et également de la plaque supérieure 54. Le moyen de chauffage 32 comporte alors les deux couches transparentes 200 disposées respectivement au contact des faces inférieure et supérieure du support de réception 28.

La ou les couches transparentes 200 sont propres, lorsqu'elles sont alimentées électriquement, à chauffer la ou les faces du support de réception 28 au contact desquelles elles sont disposées, tout en conservant leur transparence.

La couche transparente 200 comporte, par exemple, une résistance électrique réalisée selon un matériau conducteur transparent. Un tel circuit est formé sur ladite face 52, par un procédé connu, par exemple une sérigraphie. Il est notamment réalisé avec un matériau tel que l'oxyde d'indium-étain, également appelé ITO (de l'anglais *Indium Tin Oxide*).

La ou les couches transparentes 200 présentent un indice de réfraction de valeur proche de celle de l'indice de réfraction associé à la face du support de réception 28 au contact de la ou les couches transparentes 200. Par valeur proche, on entend une valeur égale, par exemple, à plus ou moins 20 % à celle de l'indice de réfraction associé à ladite face du support de réception 28.

L'indice de réfraction de l'oxyde d'indium-étain est, par exemple, sensiblement égal à 1,7 pour une longueur d'onde de 633 nm, la valeur de l'indice de réfraction étant, à la même longueur d'onde, sensiblement égal à 1,5 pour le plexiglas et 1,55 pour le verre.

Le moyen de chauffage 32 formé par la ou les couches transparentes 200 permet alors de chauffer l'échantillon 22 contenu dans le support de réception 28 sans affecter la transparence du support de réception 28, afin de ne pas perturber le trajet des photons du faisceau lumineux 46.

De préférence, la couche transparente 200 est formée sur la plaque supérieure 54 du support de réception 28. En effet, il est préférable de limiter le nombre de matériaux entre l'échantillon 22 et le capteur optique 58.

Le moyen de chauffage 32 formé par la ou les couches transparentes 200 est en outre particulièrement simple et peu coûteux.

En outre, la régulation du chauffage du support de réception 28 à l'aide de la boucle de rétroaction 72 est également simple à mettre en oeuvre avec la ou les couches transparentes 200.

Le deuxième mode de réalisation constitue un aspect de l'invention distinct de celui du premier mode de réalisation. L'homme du métier comprendra bien entendu que le moyen de chauffage 32 est susceptible de comporter à la fois l'étage 80 de commande de la mise sous tension du capteur d'image tant que la température prédéterminée de consigne Tconsigne n'est pas atteinte selon le premier mode de réalisation et la ou les couches transparentes 200 selon le deuxième mode de réalisation.

La figure 11 illustre un troisième mode de réalisation pour lequel les éléments analogues au premier mode de réalisation, décrit précédemment, sont repérés par des références identiques, et ne sont pas décrits à nouveau.

Sur la figure 11, le ou les capteurs de température 64, 66, 68 n'ont pas été représentés par souci de simplification des dessins.

Selon le troisième mode de réalisation, le moyen de chauffage 32 comporte un élément de chauffage 300, tel qu'une résistance électrique La résistance de chauffage 300 est disposée au contact de la face inférieure du capteur d'image 30 selon la direction verticale Z. Dans l'exemple de réalisation de la figure 11, la résistance de chauffage 300 est disposée au contact de la face inférieure du substrat 56. Autrement dit, le capteur d'image 30 est disposé entre le support de réception 28 et la résistance de chauffage 300 selon la direction d'éclairement Z. Le capteur d'image 30 est thermiquement conducteur, et est alors propre à conduire la chaleur dégagée par la résistance de chauffage 300, lorsqu'elle est électriquement alimentée, jusqu'au support de réception 28.

La résistance de chauffage 300 est, par exemple, en forme d'un dépôt d'éléments électriquement conducteurs au contact du capteur d'image 30, par exemple au contact de la face inférieure du substrat 56.

Le moyen de chauffage 32 formé par la résistance de chauffage 300 permet alors de chauffer l'échantillon 22 contenu dans le support de réception 28 sans perturber le trajet des photons du faisceau lumineux 46 depuis la source de lumière 26 jusqu'au capteur d'image 30, la résistance de chauffage 300 étant disposé de l'autre côté du capteur d'image 30 par rapport à la source de lumière 26.

Le moyen de chauffage 32 formé par la résistance de chauffage 300 est en outre simple et peu coûteux à mettre en œuvre.

En outre, la régulation du chauffage du support de réception 28 à l'aide de la boucle de rétroaction 72 est également simple à mettre en œuvre avec la résistance de chauffage 300.

Le troisième mode de réalisation constitue un aspect de l'invention distinct de celui du premier mode de réalisation ou encore du deuxième mode de réalisation. L'homme du métier comprendra bien entendu que le moyen de chauffage 32 est susceptible de comporter à la fois l'étage 80 de commande de la mise sous tension du capteur d'image tant que la température prédéterminée de consigne Tconsigne n'est pas atteinte selon le premier mode de réalisation, la ou les couches transparentes 200 selon le deuxième mode de réalisation et la résistance de chauffage 300 selon le troisième mode de réalisation.

Bien entendu, le moyen de chauffage 32 est également susceptible de comporter à la fois la ou les couches transparentes 200 selon le deuxième mode de réalisation et la résistance de chauffage 300 selon le troisième mode de réalisation.

Selon un quatrième mode de réalisation, le moyen de chauffage 32 comporte un élément de chauffage 300, tel qu'une résistance électrique. La résistance de chauffage 300 est disposée au contact du support de réception 28. Cette résistance électrique est, de préférence, située en dehors du champ d'observation du capteur d'image 30, ou à la limite de ce dernier, de telle sorte que son influence sur l'image de l'échantillon 22 soit négligeable. Lorsque la résistance électrique est située dans le champ du capteur d'image 30, elle délimite une région d'intérêt de l'image qui est utilisée pour les traitements réalisés par l'unité de traitement d'informations 38. Autrement dit, ces traitements sont réalisés sur une partie de l'image non influencée par la résistance électrique.

Selon ce mode de réalisation, le support de réception 28 comporte un matériau thermiquement conducteur, permettant de conduire la chaleur produite par l'échantillon 22. Ce matériau conducteur est, par exemple, de l'ITO ou une céramique transparente, par exemple à base d'AIN (Nitrure d'Aluminium)

Le moyen de chauffage 32 formé par la résistance de chauffage 300 permet alors de chauffer l'échantillon 22 contenu dans le support de réception 28 sans perturber le trajet des photons du faisceau lumineux 46 depuis la source de lumière 26 jusqu'au capteur d'image 30, la résistance de chauffage 300 étant disposé en dehors du champ d'observation dudit capteur, ou en périphérie de celui-ci.

Le moyen de chauffage 32 formé par la résistance de chauffage 300 est en outre simple et peu coûteux à mettre en œuvre.

En outre, la régulation du chauffage du support de réception 28 à l'aide de la boucle de rétroaction 72 est également simple à mettre en œuvre avec la résistance de chauffage 300.

Le quatrième mode de réalisation constitue un aspect de l'invention distinct de celui des modes de réalisation précédemment décrits. L'homme du métier comprendra bien entendu que le moyen de chauffage 32 est susceptible de comporter à la fois l'étage 80 de commande de la mise sous tension du capteur d'image tant que la température prédéterminée de consigne Tconsigne n'est pas atteinte selon le premier mode de réalisation, la ou les couches transparentes 200 selon le deuxième mode de réalisation et la résistance de chauffage 300 selon le troisième ou quatrième mode de réalisation.

Bien entendu, le moyen de chauffage 32 est également susceptible de comporter à la fois la ou les couches transparentes 200 selon le deuxième mode de réalisation et la résistance de chauffage 300 selon le troisième et/ou quatrième modes de réalisation.

On conçoit ainsi que le dispositif d'acquisition 24 selon l'invention permet d'améliorer la régulation en température du support de réception 28 et de l'échantillon 22 contenu dans ce support 28, afin d'éviter une dégradation dans le temps des propriétés de l'échantillon à observer 22.

**Revendications**

1. Dispositif (24) d'acquisition d'une image d'un échantillon (22), le dispositif d'acquisition (24) comprenant :

   - un support (28) de réception de l'échantillon (22), présentant une face transparente (52),
   - un capteur d'image (30), propre à acquérir une image de l'échantillon (22) pendant des périodes d'acquisition, capteur d'image (30) étant disposé en regard de ladite face transparente (52),
   - un moyen (32) de chauffage du support de réception (28),
   - un capteur de température (34) propre à mesurer une température du support de réception (28), et
   - un organe (36) de régulation du chauffage du support de réception (28), en fonction de la température mesurée par le capteur de température (34),

   l'organe de régulation (36) étant propre à réguler le chauffage du support de réception (28) en fonction d'une température prédéterminée de consigne (Tconsigne),
   **caractérisé en ce que** le capteur d'image (30), en dehors des périodes d'acquisition d'image, forme le moyen de chauffage (32), l'organe de régulation (36) étant propre à commander la mise sous tension du capteur d'image (30) tant que la température prédéterminée de consigne (Tconsigne) n'est pas atteinte.

2. Dispositif (24) selon la revendication 1, dans lequel le moyen de chauffage (32) comporte au moins une couche transparente (200) disposée au contact d'au moins une face (52, 54) du support de réception (28).

3. Dispositif (24) selon la revendication 2, dans lequel la couche transparente (200) est une sérigraphie de ladite face (52, 54).

4. Dispositif (24) selon la revendication 2 ou 3, dans lequel l'échantillon (22) est propre à être éclairé par un faisceau lumineux (46) selon une direction d'éclairement (Z), et la face (52, 54) au contact de la couche transparente (200) est sensiblement perpendiculaire à la direction d'éclairement (Z).

5. Dispositif (24) selon l'une quelconque des revendications précédentes, dans lequel le moyen de chauffage (32) comporte une résistance électrique de chauffage (300), et dans lequel l'échantillon (22) est propre à être éclairé par un faisceau lumineux (46) selon une direction d'éclairement (Z), le capteur d'image (30) étant disposé entre le support de réception (28) et la résistance de chauffage (300) selon la direction d'éclairement (Z).

6. Dispositif (24) selon la revendication 5, dans lequel la résistance de chauffage (300) est un dépôt d'éléments électriquement conducteurs au contact du capteur d'image (30).

7. Dispositif (24) selon l'une quelconque des revendications précédentes, dans lequel l'échantillon (22) est propre à être éclairé par un faisceau lumineux (46) selon une direction d'éclairement (Z), et la distance (D2) entre le support de réception (28) et le capteur d'image (30) selon la direction d'éclairement (Z) est inférieure à 1 cm.

8. Système d'imagerie (20), le système d'imagerie (20) comprenant un dispositif (24) d'acquisition d'une image de l'échantillon (22) et une source de lumière spatialement cohérente, propre à éclairer l'échantillon (22) selon une direction d'éclairement (Z), **caractérisé en ce que** le dispositif d'acquisition (24) est conforme à l'une quelconque des revendications précédentes.

9. Système (20) selon la revendication 8, dans lequel le support de réception (28) est disposé entre la source de lumière (26) et le capteur d'image (30) selon la direction d'éclairement (Z).

**Patentansprüche**

1. Vorrichtung (24) zum Erfassen eines Bildes einer Probe (22), wobei die Vorrichtung zum Erfassen (24) aufweist:

   - eine Halterung (28) zum Aufnehmen der Probe (22), welche eine transparente Fläche (52) hat,
   - einen Bildsensor (30), welcher imstande ist, ein Bild der Probe (22) während Erfassungszeiträumen zu erfassen, wobei der Bildsensor (30) gegenüber von der besagten transparenten Fläche (52) angeordnet ist,
   - ein Mittel (32) zum Heizen der Halterung zum Aufnehmen (28),
   - einen Temperatursensor (34), welcher imstande ist, eine Temperatur der Halterung zum Aufnehmen (28) zu

**EP 2 914 952 B1**

messen, und

- ein Organ (36) zum Steuern des Heizens der Halterung zum Aufnehmen (28), in Abhängigkeit von der mittels des Temperatursensors (34) gemessenen Temperatur,

wobei das Organ zum Steuern (36) imstande ist, das Heizen der Halterung zum Aufnehmen (28) in Abhängigkeit von einer vorbestimmten Solltemperatur (Tconsigne) zu steuern, **dadurch gekennzeichnet, dass** der Bildsensor (30) außerhalb der Bilderfassungszeiträume das Mittel zum Heizen (32) bildet,

wobei das Organ zum Steuern (36) imstande ist, das Unter-Spannung-Setzen des Bildsensors (30) zu steuern, solange die vorbestimmte Solltemperatur (Tconsigne) nicht erreicht ist.

2. Vorrichtung (24) gemäß Anspruch 1, wobei das Mittel zum Heizen (32) mindestens eine transparente Schicht (200) aufweist, welche in Kontakt mit zumindest einer Fläche (52, 54) der Halterung zum Aufnehmen (28) angeordnet ist.

3. Vorrichtung (24) gemäß Anspruch 2, wobei die transparente Schicht (200) ein Siebdruck der besagten Fläche (52, 54) ist.

4. Vorrichtung (24) gemäß Anspruch 2 oder 3, wobei die Probe (22) imstande ist, mittels eines Lichtbündels (46) entlang einer Beleuchtungsrichtung (Z) beleuchtet zu werden, und die Fläche (52, 54), welche in Kontakt mit der transparenten Schicht (200) ist, im Wesentlichen senkrecht zur Beleuchtungsrichtung (Z) ist.

5. Vorrichtung (24) gemäß irgendeinem der vorherigen Ansprüche, wobei das Mittel zum Heizen (32) einen elektrischen Heizwiderstand (300) aufweist, und wobei die Probe (22) imstande ist, mittels eines Lichtbündels (46) entlang einer Beleuchtungsrichtung (Z) beleuchtet zu werden, wobei der Bildsensor (30) entlang der Beleuchtungsrichtung (Z) zwischen der Halterung zum Aufnehmen (28) und dem Heizwiderstand (300) angeordnet ist.

6. Vorrichtung (24) gemäß Anspruch 5, wobei der Heizwiderstand (300) ein Depot elektrisch leitender Elemente ist, welche in Kontakt mit dem Bildsensor (30) sind.

7. Vorrichtung (24) gemäß irgendeinem der vorherigen Ansprüche, wobei die Probe (22) imstande ist, mittels eines Lichtbündels (46) entlang einer Beleuchtungsrichtung (Z) beleuchtet zu werden, und wobei der Abstand (D2) zwischen der Halterung zum Aufnehmen (28) und dem Bildsensor (30) entlang der Beleuchtungsrichtung (Z) kleiner als 1 cm ist.

8. Abbildungssystem (20), wobei das Abbildungssystem (20) aufweist eine Vorrichtung (24) zum Erfassen eines Bildes der Probe (22) und eine räumlich kohärente Lichtquelle, welche imstande ist, die Probe (22) entlang einer Beleuchtungsrichtung (Z) zu beleuchten, **dadurch gekennzeichnet, dass** die Vorrichtung zum Erfassen (24) gemäß irgendeinem der vorherigen Ansprüche ist.

9. System (20) gemäß Anspruch 8, wobei die Halterung zum Aufnehmen (28) entlang der Beleuchtungsrichtung (Z) zwischen der Lichtquelle (26) und dem Bildsensor (30) angeordnet ist.

**Claims**

1. An acquisition device (24) for acquiring an image of a sample (22), the acquisition device (24) comprising:

   - a receiving support (28) for receiving the sample (22), the receiving support having a transparent surface (52); and
   - an image sensor (30), capable of acquiring an image of the sample (22) during periods of acquisition, the image sensor (30) being disposed in front of said transparent surface (52);
   - a heating means (32) for heating the receiving support (28),
   - a temperature sensor (34) capable of measuring a temperature of the receiving support (28), and
   - a regulating unit (36) for regulating the heating of the receiving support (28), based on the temperature measured by the temperature sensor (34),

   the regulating unit (36) being capable of regulating the heating of the receiving support (28) in function of a predetermined set point temperature (Tset point),

**9**

**characterised in that** the image sensor (30), outside the periods of image acquisition, forms the heating means (32), the regulating unit (36) being capable of controlling the powering up of the image sensor (30) as long as the predetermined set point temperature (Tset point) has not been reached.

2. The device (24) according to claim 1, wherein the heating means (32) comprises at least one transparent layer (200) disposed in contact with at least one surface (52, 54) of the receiving support (28).

3. The device (24) according to claim 2, wherein the transparent layer (200) is a screen print of said surface (52, 54).

4. The device (24) according to claim 2 or 3, wherein the sample (22) is adapted to be illuminated by a light beam (46) along a direction of illumination (Z), and the surface (52, 54) in contact with the transparent layer (200) is substantially perpendicular to the direction of illumination (Z).

5. The device (24) according to any one of the preceding claims, wherein the heating means (32) includes an electrical heating resistor (300), and wherein the sample (22) is adapted to be illuminated by a light beam (46) along a direction of illumination (Z), the image sensor (30) being disposed between the receiving support (28) and the heating resistor (300) along the direction of illumination (Z).

6. The device (24) according to claim 5, wherein the heating resistor (300) is a deposit of electrically conductive elements in contact with the image sensor (30).

7. The device (24) according to any one of the preceding claims, wherein the sample (22) is adapted to be illuminated by a light beam (46) along a direction of illumination (Z), and the distance (D2) between the receiving support (28) and the image sensor (30) along the direction of illumination (Z) is less than 1 cm.

8. An imaging system (20), the imaging system (20) comprising an acquisition device (24) for acquiring an image of a sample (22) and a spatially coherent light source, capable of illuminating the sample (22) along a direction of illumination (Z), **characterised in that** the acquisition device (24) is according to any one of the preceding claims.

9. The system (20) according to claim 8, wherein the receiving support (28) is disposed between the light source (26) and the image sensor (30) along the direction of illumination (Z).

FIG.1

FIG.2

## FIG.3

72

$T_{consigne}$

76

80

78

$T_{mes}$

74

## FIG.4

Δt

Acquisition

92    92

t

Mise sous tension
de la caméra

t

Tcapt=Tmax

Tmin

t

## FIG.5

Δt

Acquisition

92    92

t

90

Mise sous tension
de la caméra

t

Tmax

Tcapt

Tmin

t

**FIG.6**

100

VII

29,2°C
29
28
27
26
25
24,2°C

°C

28

26

24

30

102

**FIG.7**

**FIG.8**

110

IX

28,9°C
28
27
26
25
24,0°C

°C

29

27
26
25

23

112

**FIG.9**

**FIG.10**

**FIG.11**

## RÉFÉRENCES CITÉES DANS LA DESCRIPTION

**Documents brevets cités dans la description**

- EP 2233923 A1

**Littérature non-brevet citée dans la description**

- **ALLIER et al.** Thin wetting film lensless imaging. *Optical Diagnostics and Sensing*
- **POHER et al.** Lensfree in-line holographic detection of bacteria. *Advanced MicroscopyTechniques*
- **CHRISTEN.** *Hybrid Silicon/Silicone (polydimethylsiloxane) Microsystem for Cell Culture*